Europäisches Patentamt

European Patent Office

Office européen des brevets

(11) Veröffentlichungsnummer: **0 198 275**
A1

## (12) EUROPÄISCHE PATENTANMELDUNG

(21) Anmeldenummer: 86103997.2

(22) Anmeldetag: 24.03.86

(51) Int. Cl.⁴: **F 16 B 13/04,** F 16 B 19/00, F 16 B 19/08, F 16 B 19/10

(30) Priorität: 16.04.85 DE 3513644

(43) Veröffentlichungstag der Anmeldung: 22.10.86 Patentblatt 86/43

(84) Benannte Vertragsstaaten: BE CH DE FR GB IT LI SE

(71) Anmelder: **Kraemer, Ludwig, Sudetenstrasse 23, D-8761 Mönchberg (DE)**

(72) Erfinder: **Kraemer, Ludwig, Sudetenstrasse 23, D-8761 Mönchberg (DE)**

(74) Vertreter: **Patentanwälte Grünecker, Kinkeldey, Stockmair & Partner, Maximilianstrasse 58, D-8000 München 22 (DE)**

(54) Nietmutter.

(57) Die Erfindung bezieht sich auf eine Nietmutter (1), die mit Hilfe eines in ein Innengewinde (5) in der Nietmutter (1) einschraubbaren Gewindedorns (16) setzbar ist. Die Nietmutter hat einen gegenüber den bekannten Nietmuttern erweiterten Anwendungsbereich, da zusätzlich mindestens ein weiteres Innengewinde (6) vorgesehen ist und somit eine größere Variationsbreite für die Schraubenauswahl für die spätere Befestigung und die Anzahl zu befestigender Bauteile bietet. Dabei kann das zusätzliche Innengewinde (6) direkt in die Nietmutter (1) eingeformt und/oder in einen Gewindeeinsatz (25) vorgesehen werden. In einem weiteren Ausführungsbeispiel wird der Anwendungsbereich der Nietmutter noch weiter erhöht, indem durch eine konische Ausgestaltung des Verformungsbereichs der Nietmutter (1) ihre Verwendung für verschieden dicke Bleche bei gleicher Schaftlänge sichergestellt wird.

ACTORUM AG

<u>Nietmutter</u>

<u>B e s c h r e i b u n g</u>

Die Erfindung bezieht sich auf eine Nietmutter, die mit Hilfe eines Gewindedorns blindsetzbar ist, wobei die Nietmutter einen Schaft aufweist, der an einem Ende mit einem Setzkopf versehen ist, im Inneren ein in den Schaft eingeformtes erstes, als Zuggewinde ausgebildetes Innengewinde enthält und einen zwischen dem ersten Innengewinde und dem Setzkopf angeordneten Verformungsbereich aufweist, und wobei der Gewindedorn mit einem in das erste Innengewinde der Nietmutter durch eine Innenbohrung vom Setzkopfende her einschraubbaren Außengewinde versehen ist.

Nietmuttern werden beispielsweise dort eingesetzt, wo eine Schraubverbindung in dünnen Blechen, in die normalerweise kein Gewinde geschnitten werden kann, vorgesehen werden soll. Eine derartige Nietmutter ist beispielsweise aus der US-PS 3 750 525 bekannt. Bei der bekannten Nietmutter schließt sich an den Verformungsbereich, der zum Befestigen der Nietmutter am Blech dient, ein einziges Gewinde an. In dieses Gewinde wird ein Gewindedorn eingeschraubt und die Nietmutter innerhalb des Loches im Blech plaziert. Dann wird der Verformungsbereich durch Zug am Gewindedorn ausgebaucht, wodurch ein Schließkopf entsteht, der die Gewindemutter eng in der Bohrung des Bleches verankert. Sitzt die Mutter fest, wird der Gewindedorn aus- und die Befestigungsschraube mit dem zu befestigenden Teil eingeschraubt. Der Gewindedurchmesser des Gewindes der Nietmutter ist abhängig vom Werkstoff der Nietmutter, vom Durchmesser der Bohrung im Blech, von der Stärke des Bleches und somit der Stärke der notwendigen Verformung usw.. Das heißt jedoch, daß die Befestigungsschraube, die später in die Nietmutter eingeschraubt werden muß,
sich in ihrem Durchmesser nach dem Durchmesser der Nietmutter richten muß. Da das Zuggewinde der Nietmutter jedoch zum Aufbringen der notwendigen Verformungskräfte
eine gewisse Größe aufweisen muß, ist der Anwendungsbereich der bekannten Nietmutter auf die Befestigung mit
größeren Befestigungsschrauben beschränkt. Schließlich
ist es nicht immer auszuschließen, daß das Zuggewinde
beim Setzen der Nietmutter beschädigt wird, was sich
nachteilig auf den Sitz der späteren Befestigungsschraube auswirkt.

Der Erfindung liegt somit die Aufgabe zugrunde, eine
zuverlässig wirkende Nietmutter für einen größeren Anwendungsbereich zu schaffen.

Die Aufgabe wird durch die kennzeichnenden Merkmale des
Hauptanspruches gelöst.

Bei der erfindungsgemäßen Nietmutter kann, je nach Bedarf Befestigungsgewinde und Zuggewinde voneinander getrennt sein, so daß auch ein beliebig kleines Befestigungsgewinde vorgesehen werden kann. Trotzdem kann die
Nietmutter auch "normal", d. h. mit einer in das Zuggewinde einschraubbaren Befestigungsschraube verwendet
werden. Auf diese Weise können die Durchmesser der Befestigungsschrauben je nach dem Verwendungszweck
ausgewählt werden.

In Anspruch 2 ist ein erstes Ausführungsbeispiel einer
Anordnung des zweiten Innengewindes beschrieben. Dieses
Ausführungsbeispiel hat den Vorteil, daß keine
zusätzlichen Teile notwendig sind. Jedoch ist durch das
direkt in den Schaft der Nietmutter eingearbeitete zweite Innengewinde der Durchmesser der Befestigungsschraube
von vornherein festgelegt und kann nicht variiert

3 0198275

werden.

Anspruch 3 beschreibt eine fertigungstechnisch besonders bevorzugte Ausbildung.

Die Ausgestaltung nach Anspruch 4 ist für Sonderzwecke einsetzbar, wenn z. B. Befestigungsschrauben von beiden Seiten eingeschraubt werden müssen.

Durch die Ausgestaltung nach Anspruch 5 wird sichergestellt, daß die zur Verformung notwendigen Zugkräfte ohne Beschädigung des Gewindes übertragen werden können.

Durch die Ausgestaltung nach Anspruch 6 ist es möglich, die zur Verformung notwendigen Zugkräfte besser zu verteilen, so daß die zur Kraftübertragung notwendige Gewindelänge reduziert werden kann.

Anspruch 7 beschreibt eine zweite Möglichkeit, ein zweites Innengewinde in der Nietmutter anzuordnen. Diese Möglichkeit hat den Vorteil, daß der Gewindedurchmesser des Befestigungsgewindes unmittelbar am Einsatzort gewählt werden kann, was eine Lagerhaltung verschiedener Nietmuttern mit unterschiedlich großen zweiten Innengewinden überflüssig macht. Nachteilig ist hieran, daß ein zusätzliches Teil erforderlich ist.

Wenn das Befestigungsgewinde, wie im Normalfalle den kleineren Gewindedurchmesser aufweisen soll, so ist die Ausgestaltung nach Anspruch 8 zweckmäßig.

Wenn eine Nietmutter mit einem eingeformten zweiten Innengewinde verwendet wird, so ist es gemäß Anspruch 9 zweckmäßig, den Gewindedurchmesser des zweiten Innengewindes des Gewindeeinsatzes gleich groß auszubilden, so daß durch die Befestigungsschraube der Gewindeeinsatz in
der Nietmutter festgelegt werden kann.

Auch die Ausgestaltungen nach den Ansprüchen 10 bis 12
dienen der Festlegung des Gewindeeinsatzes bezüglich der
Nietmutter. Dabei ist die Ausgestaltung nach Anspruch 12
besonders dort vorteilhaft, wo eine Schmutzansammlung
zwischen dem kleineren Durchmesser der Befestigungsschraube und dem größeren Innendurchmesser des Verformungsbereiches des Schaftes der Nietmutter verhindert
werden soll.

Die Ausgestaltung nach Anspruch 13 erweitert den Verwendungsbereich zusätzlich, da es durch den konisch verlaufenden Verformungsbereich möglich ist, eine Nietmutter mit einer bestimmten Gewinde- bzw. Schaftlänge für
einen wesentlich größeren Klemmdickenbereich
einzusetzen, als dies mit Nietmuttern mit konstanter
Wandstärke im Verformungsbereich der Fall ist.

Die Ausgestaltung nachAnspruch 14 erlaubt das Befestigen
von Bauteilen beidseitig des mit der Nietmutter versehenen Werkstückes durch unterschiedliche
Befestigungsschrauben.

Die Ausgestaltung nach Anspruch 15 ist dort vorteilhaft,
wo eine dichte Gewindeverbindung erreicht werden soll.

Ausführungsbeispiele der Erfindung werden nachfolgend
anhand von Zeichnungen näher erläutert. Es zeigen:

Fig. 1    ein erstes Ausführungsbeispiel der
          erfindungsgemäßen Nietmutter,

Fig. 2    ein zweites Ausführungsbeispiel der
          erfindungsgemäßen Nietmutter,

Fig. 3    ein drittes Ausführungsbeispiel der
          erfindungsgemäßen Nietmutter für eine
          Mehrbereichs-Verwendung,

Fig. 4    ein viertes Ausführungsbeispiel der
          erfindungsgemäßen Nietmutter,

Fig. 5    ein speziell zum Setzen der erfindungsgemäßen
          Nietmutter ausgebildeter Gewindedorn,

Fig. 6    die Nietmutter nach Fig. 1 in gesetztem
          Zustand,

Fig. 7a   die Nietmutter aus Fig. 3 bei Anwendung im
          maximalsten Klemmstärkenbereich,

Fig. 7b   die Nietmutter aus Fig. 3 bei der Anwendung im
          minimalsten Klemmstärkenbereich,

Fig. 8a   eine konventionelle Nietmutter mit einem
          erfindungsgemäßen Gewindeeinsatz in gesetztem
          Zustand,

Fig. 8b   der Gewindeeinsatz aus Fig. 8a,

Fig. 9a   die Nietmutter nach Fig. 1 in gesetztem
          Zustand mit einem zweiten Ausführungsbeispiels
          eines Gewindeeinsatzes, und

Fig. 9b   der Gewindeeinsatz aus Fig. 9a.

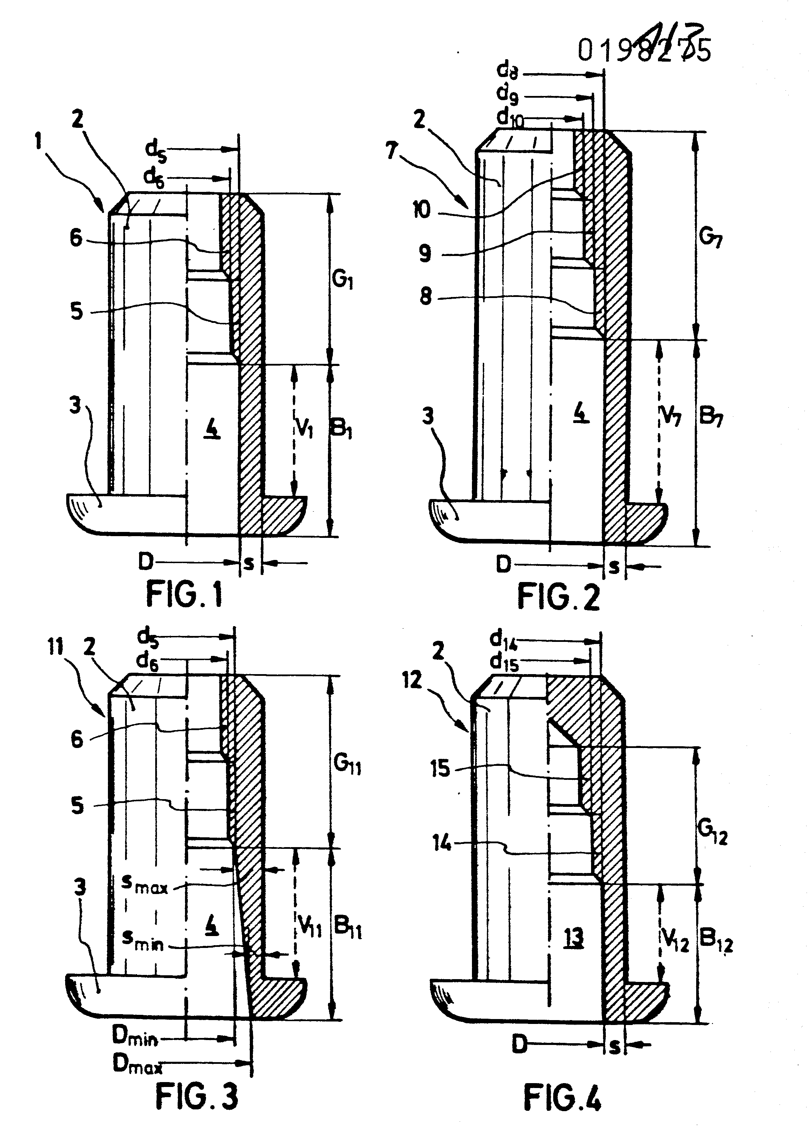

Aus Fig. 1 ist eine Nietmutter 1 ersichtlich, die einen
Schaft 2 und einen Setzkopf 3 üblicher Ausbildung
aufweist. Der Schaft 2 ist zylindrisch mit im wesentlichen glatter Außenfläche ausgebildet. Das dem Setzkopf
3 gegenüberliegende freie Ende des Schaftes 2 ist von außen in üblicher Weise angefast. Durch den Setzkopf 3 und den Schaft 2 erstreckt sich mittig eine als Durchgangsbohrung 4 ausgebildete Innenbohrung. Die Durchgangsbohrung 4 ist in einem ersten, am Setzkopf 3 mündenden Bereich $B_1$ glattwandig mit einem Durchmesser D ausgebildet. An den glattwandigen Bereich $B_1$ schließt sich in Richtung auf das freie Ende des Schaftes 2 ein Innengewinde-Bereich $G_1$ an. Der Innengewinde-Bereich $G_1$ weist zwei Gewinde 5 und 6 auf. Das sich an die Zylinderbohrung $B_1$ anschließende Gewinde 5 weist einen Gewindedurchmesser $d_5$ auf, der kleiner oder gleich dem Durchmesser D der Zylinderbohrung $B_1$ ist. Der Gewindedurchmesser $d_6$ des Gewindes 6, das sich zwischen dem Gewinde 5 und dem freien Ende des Schaftes 2 erstreckt, ist kleiner als der Gewindedurchmesser $d_5$ des ersten Gewindes 5. Auf diese Weise weist der sich zwischen dem Gewinde 5 und dem Setzkopf 3 erstreckende Teil der Durchgangsbohrung 4 die kleinste Wandstärke s auf und dient somit als Verformungsbereich $V_1$ zum Bilden eines weiter unten beschriebenen Schließkopfes, wenn entweder das Gewinde 5 und/oder das Gewinde 6 als Zuggewinde verwendet wird, in das oder die ein passender Gewindedorn eingeschraubt werden kann.

Fig. 2 zeigt eine zweite Nietmutter 7, die ebenfalls einen Schaft 2 mit zylindrischer, am freien Ende angefaster Außenfläche, einen üblichen Setzkopf 3 und eine als Durchgangsbohrung 4 ausgebildete Innenbohrung aufweist. Die Durchgangsbohrung 4 ist über einen Bereich $B_7$ glattwandig als Zylinderbohrung mit einem Durchmesser D und einer eine Verformung in einem Verformungsbereich $V_7$ gestattenden Wandstärke s ausgestaltet. An den glattwandigen Bereich $B_7$ schließt sich in Richtung auf das freie Ende des Schaftes 2 ein Innengewinde-Bereich $G_7$ an, der drei Innengewinde 8, 9 und 10 mit jeweils abnehmenden Gewindedurchmessern $d_8$, $d_9$ und $d_{10}$ enthält,

wobei der Gewindedurchmesser $d_8$ kleiner oder gleich dem Durchmesser D im Bereich der Zylinderbohrung $B_7$ ist.

Aus Fig. 3 ist eine weitere Nietmutter 11 ersichtlich, die wiederum den bereits beschriebenen Schaft 2 und den üblichen Setzkopf 3 aufweist. Durch das Innere von Schaft 2 und Setzkopf 3 erstreckt sich die als Durchgangsbohrung 4 ausgebildete Innenbohrung. Der sich in der Nähe des freien Endes des Schaftes 2 befindende Innengewinde-Bereich $G_{11}$ ist in der bereits in Fig. 1 beschriebenen Weise mit den zwei Gewinden 5 und 6 versehen. Die Nietmutter 11 ist eine Mehrbereichs-Nietmutter und als solche für einen größeren Blechstärkenbereich geeignet. Zu diesem Zweck ist die Innenbohrung 4 im glattwandigen Bereich $B_{11}$ konisch ausgebildet, wobei sich der größte Durchmesser $D_{max}$ des Konus in der Nähe des Setzkopfes 3 und der kleinste Durchmesser $D_{min}$, und somit die größte Wandstärke $s_{max}$ im glattwandigen Bereich $B_{11}$, an oder in der Nähe des Gewindebereichs $G_{11}$ befindet. Die kleinste Wandstärke $s_{min}$ des Schaftes 2 befindet sich an der dem freien Ende zugewandten Oberfläche des Setzkopfes 3. Der Verformungsbereich $V_{11}$ ist zwischen 30 und 50 %, bevorzugt 40 %, länger als das dickste zu vernietende Material. Das Verhältnis $s_{max}:s_{min}$ bewegt sich zwischen 1,5:1 und 3:1, bevorzugt 2:1. $D_{min}$ ist größer oder gleich $d_5$, $d_5$ ist größer als $d_6$.

Aus Fig. 4 ist eine weitere Nietmutter 12 ersichtlich, die den üblichen Schaft 2 und den Setzkopf 3 aufweist. Die Nietmutter 12 ist geschlossen ausgebildet, wobei die Innenbohrung die Form einer sich vom Setzkopfende in den Schaft 2 hineinerstreckenden Sackbohrung 13 aufweist. Die Sackbohrung 13 endet in üblicher Weise vor dem freien Ende des Schaftes 2. Der glattwandige Bereich $B_{12}$ der Sackbohrung 13 ist als Zylinderbohrung mit dem Durchmesser D ausgebildet, so daß die verbleibende Wandstärke s über den gesamten Verformungsbereich $V_{12}$ gleich ist. An den Bereich $B_{12}$ schließt sich der mit zwei Gewinden 14 und 15 ausgebildete Innengewinde-Bereich $G_{12}$ an. Der Gewindedurchmesser $d_{14}$ des sich an den Bereich $B_{12}$ anschließenden Gewindes 14 ist gleich oder kleiner als der Durchmesser D der Zylinderbohrung im Bereich $B_{12}$ aber größer als der Gewindedurchmesser $d_{15}$ des sich in Richtung auf das freie Ende des Schaftes 2 anschließenden Gewindes 15.

Alle beschriebenen Nietmuttern 1, 7, 11 und 12 können ohne weiteres mit einem der üblichen Gewindedorne gesetzt werden, wobei zweckmäßigerweise ein Gewindedorn mit einem Gewindedurchmesser ausgewählt wird, der in das Gewinde 5, 8, 14 mit dem größten Gewindedurchmesser d eingeschraubt werden kann. Auf diese Weise wird eine optimale Kraftübertragung erreicht, ohne daß die Gefahr besteht, daß das als Zuggewinde verwendete Gewinde ausreißt oder sonstwie beschädigt wird, was ein Wiederausschrauben des Gewindedorns nach dem Setzen und die spätere Verwendung des Zuggewindes als zusätzliches Befestigungsgewinde verhindern bzw. erschweren würde.

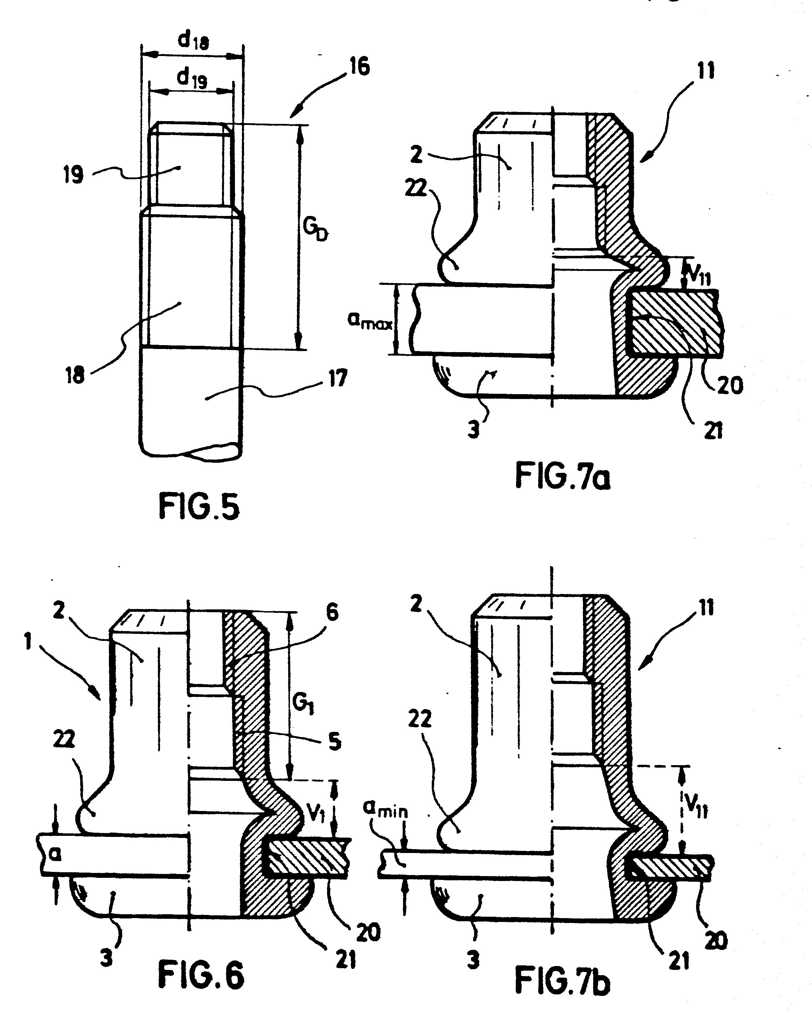

Zum Setzen der erfindungsgemäßen Nietmuttern kann jedoch auch ein schematisch in Fig. 5 dargestellter Gewindedorn 16 verwendet werden. Der Gewindedorn 16 weist einen der üblichen Zugschäfte 17 auf, die zum Einspannen in handelsübliche hand- oder maschinenbetriebene Setzwerkzeuge, wie Setzzangen o.ä., geeignet ist. Statt des üblichen einstufigen Gewindes an einem Ende weist der erfindungsgemäße Gewindedorn 16 einen mehrstufigen Gewindebereich $G_D$ auf, der im dargestellten Fall zwei Gewinde 18 und 19 mit unterschiedlichen Gewindedurchmessern $d_{18}$ und $d_{19}$ enthält, wobei das dem Schaft 17 anliegende Gewinde 18 einen größeren Gewindedurchmesser

$d_{18}$ aufweist als das sich anschließende Gewinde 19.

Die Verwendung des erfindungsgemäßen Gewindedornes 16 ist jedoch nur dann möglich, wenn die Gewinde 18 und 19 die gleiche Steigung aufweisen, was unter Umständen durch Kombinationen genormter Normal- mit genormten Feingewinden erreicht werden kann. Darüberhinaus müssen auch die Gewinde 5 und 6, bzw. 14 und 15 untereinander und mit den Gewinden 18 und 19 die gleiche Steigung aufweisen. der Gewindebereich $G_D$ kann jedoch auch dreistufig mit drei den entsprechenden Gewinden 8, 9 und 10 der Nietmutter 7 aus Fig. 2 entsprechenden Gewinden ausgebildet sein. Auch in diesem Falle ist es notwendig, daß alle verwendeten Gewinde am Gewindedorn und an der Nietmutter die gleiche Steigung aufweisen.

Die absoluten Abmessungen der erfindungsgemäßen Nietmuttern 1, 7, 11 und 12, d. h. der Außendurchmesser und die Länge des Schaftges 2, die Form, der Durchmesser und die Höhe des Setzkopfes 3, die Wandstärke s im Verformungsbereich V, der Gewindedurchmesser d, die Länge des Gewindebereiches G usw., werden wie im Stand der Technik üblich, nach Erfahrungswerten bestimmt. Die Erfahrungswerte richten sich nach dem verwendeten Werkstoff für die Nietmutter, der Stärke und des Materials des zu vernietenden Bauteiles, die aufzubringende Verformungskraft, der spätere Verwendungszweck usw..

Die erwähnten Abmessungen müssen so ausgewählt werden, daß sich nach dem Setzen der Nietmuttern die in den Fig. 6, 7a und 7b gezeigten Formen ergeben.

Fig. 6 zeigt die Nietmutter 1 mit dem Schaft 2 und dem Setzkopf 3, die in ein Blech 20 mit der Blechstärke a eingesetzt wurde. Vor dem Setzen wird beispielsweise der Gewindedorn 17 mit seinem Außengewinde-Bereich $G_D$ vom

Setzkopf 3 her in die Durchgangsbohrung 4 eingeführt und in den Innengewinde-Bereich $G_1$ eingeschraubt. Dann wird der Schaft 2 der Nietmutter durch eine Öffnung 21 im Blech 20 hindurchgeschoben. Die Öffnung 21 hat zweckmäßigerweise im wesentlichen den gleichen Durchmesser wie der Schaft 2. Vor oder nach dem Durchstecken des Schaftes 2 durch die Öffnung 21 wird der Schaft 17 des Gewindedornes 16 in der Spannvorrichtung eines der üblichen Setzwerkzeuge festgespannt. Das Setzwerkzeug preßt gleichzeitig den Setzkopf 3 gegen das Blech 20 und zieht den Gewindedorn 16 an. Dadurch wird der Verformungsbereich $V_1$ zu einem Schließkopf 22 geformt, der die Nietmutter 1 fest im Inneren der Öffnung 21 hält. Danach wird der Gewindedorn 16 ausgeschraubt, so daß eine oder zwei Befestigungsschrauben mit unterscheidlichen Durchmessern ein- oder beidseitig in die Nietmutter 1 eingeschraubt werden können.

In den Fig. 7a und 7b ist die Nietmutter 11 aus Fig. 3 in gesetztem Zustand ersichtlich. In Fig. 7a weist das Blech 20 die maximal mögliche Blechstärke $a_{max}$ und in Fig. 7b die minimalste Blechstärke $a_{min}$ auf. Durch die konische Ausgestaltung des Verformungsbereiches $V_{11}$ wird erreicht, daß sich die geringste Wandstärke des zwischen dem Zuggewinde und der Oberfläche des Bleches 20 aus der Öffnung 21 herausragenden Schaftes 2 immer neben der dem freien Ende des Schaftes 2 zugewandten Oberfläche des Bleches 20 befindet. Diese Stelle bietet den Verformungskräften den geringsten Widerstand, so daß der Schließkopf 22 immer genau auf der Oberfläche des Bleches 20 gebildet wird. Dadurch wird für alle Blechdicken innerhalb des Klemmstärkenbereiches zwischen $a_{min}$ und $a_{max}$ ein fester Sitz der Nietmutter 11 in der Öffnung 21 des Bleches 20 erreicht. Da sich die Dimensionierung der Nietmutter, insbesondere der Länge des Verformungsbereiches, nach der größten Klemmstärke richten muß, steht für den Schließkopf 22 bei geringeren
Blechstärken a wesentlich mehr Material zur Verfügung,
als dies bei Nietmuttern mit konstanter Wandstärke s der
Fall ist. Da sich weiterhin die Nietmutter 11 immer genau an definierter Stelle ausbaucht, kann dieses
zusätzliche Material zum Bilden eines vergrößerten
Schließkopfes 22 voll ausgenutzt werden, was wiederum
dem festen Sitz der Nietmutter auch in dünnen Blechen
verbessert (Schutz gegen das sogenannte "Ausknöpfen)".
Mit der Nietmutter 11 konnten in der Praxis beispielsweise für den M3x0,35 - Zuggewinde und einem M1,7x0,35
Befestigungsgewinde Klemmstärken zwischen 1 bis 4 mm abgedeckt werden. Bei Nietmuttern mit konstanter
Wandstärke im Verformungsbereich sind dazu fünf verschiedene Schaftlängen erforderlich.

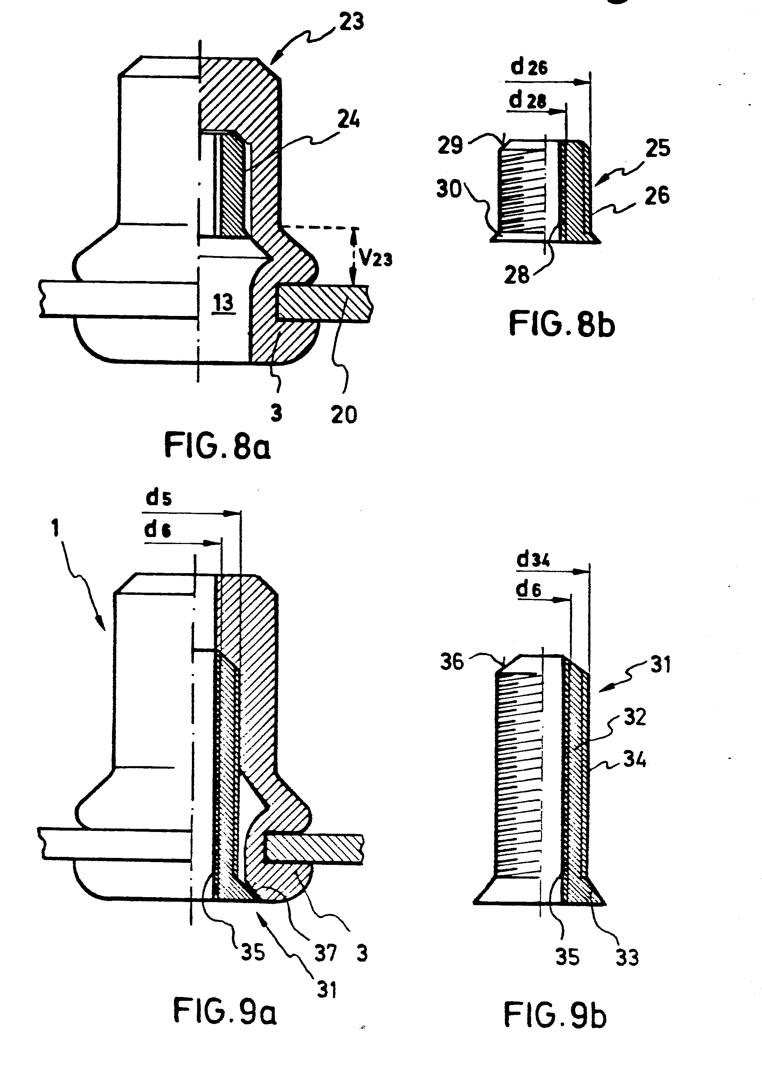

In den Fig. 8 und 9 wird eine weitere alternativ oder
zusätzlich zur Ausführung nach den Figuren 1 bis 4 anwendbare Möglichkeit beschrieben, den zweiten Innendurchmesser in der Nietmutter vorzusehen.

In Fig. 8a ist eine konventionell ausgebildete Nietmutter 23 in gesetztem Zustand ersichtlich. Die Nietmutter
23 enthält ein erstes, einziges Innengewinde 24, das als
Zuggewinde ausgebildet ist. Die Nietmutter 23 wies vor
dem Setzen eine als Sackbohrung ausgebildete
zylindrische Innenbohrung 4 mit dem Verformungsbereich
$V_{23}$ auf. Die Nietmutter 23 wurde in üblicher Weise
gesetzt, indem das Außengewinde eines Gewindedorn in das
Zuggewinde 24 eingeschraubt wurde, die Nietmutter 23
durch die Bohrung 21 im Blech 20 bis zum Anschlag des
Setzkopfes 3 an das Blech 20 gesteckt und der Gewindedorn angezogen wurde. Der Gewindedorn wurde aus dem Zuggewinde 24 herausgeschraubt, so daß der Platz frei wird
zum Einschrauben des in Fig. 8b näher dargestellten Gewindeeinsatzes 25.

Der Gewindeeinsatz 25 ist im wesentlichen als Gewindestift ausgebildet und weist einen Außendurchmesser 26
auf, dessen Gewindedurchmesser $d_{26}$ dem Gewindedurchmesser $d_{24}$ des Zuggewindes 24 angepaßt ist. Der Gewindeeinsatz 25 enthält das als Befestigungsgewinde ausgebildete
zweite Innengewinde 28 mit einem Gewindedurchmesser $d_{28}$,
der selbstverständlich kleiner ist als $d_{24}$. Das Innengewinde 28 erstreckt sich durch die gesamte Länge des Gewindeeinsatzes 25. An einem Ende des Gewindeeinsatzes 25
ist eine Anfasung 29 und am gegenüberliegenden Ende ein
schräger Kopfansatz 30 vorgesehen. Wird der Gewindeeinsatz 25, beispielsweise durch Eingriff eines Schraubendrehers in einen nicht dargestellten Schlitz bzw. Kreuzschlitz am Kopfende des Gewindeeinsatzes 25, in das Zuggewinde eingeschraubt, so wird die Einschraubtiefe durch
das Anschlagen der Anfasung 29 an den Grund der Sackbohrung 13 und/oder durch Anschlagen des Kopfansatzes 30
an den Übergang zwischen dem glattwandigen Bereich der
Sackbohrung 13 und dem Zuggewinde 24 begrenzt. Im
Ausführungsbeispiel nach Fig. 8b ist der Gewindeeinsatz
25 etwa so lang, wie das Zuggewinde 24.

In den Fig. 9a und 9b ist ein zweiter Gewindeeinsatz 31
ersichtlich. Der Gewindeeinsatz 31 ist in Fig. 9a in eine Nietmutter 1 nach Fig. 1 eingeschraubt. Die Nietmutter 1 wurde in bereits anhand Fig. 6 beschriebener Weise
gesetzt und der Gewindedorn entfernt. Dann wurde der in
Fig. 9b näher dargestellte Gewindeeinsatz 31
eingeschraubt. Der Gewindeeinsatz 31 weist ein Schaftteil 32 mit einem etwas vergrößerten Kopf 33 auf. Der
Schaftteil 32 ist an seiner Außenseite mit einem
Außengewinde 34 versehen, dessen Gewindedurchmesser $d_{34}$
dem Gewindedurchmesser $d_5$ des ersten, als Zuggewinde
verwendeten Innengewindes 5 angepaßt ist, so daß der Gewindeeinsatz 31 in das Gewinde 5 eingeschraubt werden kann. Durch die gesamte Länge des Gewindeeinsatzes 31 erstreckt sich ein Innengewinde 35, dessen Durchmesser $d_{35}$ dem Durchmesser $d_6$ des zweiten Gewindes 6 der Nietmutter 1 entspricht. An einem Ende des Schaftes 32 ist eine Anfasung 36 vorgesehen, die analog der Anfasung 29 des Gewindeeinsatzes 25 ausgebildet sein kann. Der Kopfansatz 33 weist einen größten Durchmesser auf, der gleich oder größer ist als der Durchmesser des glattwandigen Bereiches der Innenbohrung 4 der Nietmutter 1. Dadurch verschließt der Kopfansatz 33 nach dem Einschrauben des Gewindeeinsatzes 31 die Innenbohrung 4. Bevorzugt kann die Nietmutter 1 am Setzkopf 3 mit einer Abschrägung 37 versehen sein, deren Gestalt und Abmessung dem Kopfansatz 33 angepaßt ist, so daß der Kopfansatz 33 in den Setzkopf 3 versenkt werden kann. Die Länge des Gewindeeinsatzes 31 ist gleich oder kleiner als der Abstand zwischen der Oberfläche des Setzkopfes 3 und dem Ende des Gewindes 6 und größer als der Abstand zwischen der Oberseite des Setzkopfes 3 und dem Anfang des Gewindes 5. Auf diese Weise wird sichergestellt, daß einerseits der Kopfansatz 33 mit der Oberfläche des Setzkopfes 3 abschließen kann und andererseits das Außengewinde 34 eine genügend weite Strecke in das Gewinde 5 eingeschraubt werden kann. Im Idealfall schlagen sowohl der Kopfansatz 33 an die Anschrägung 37 als auch die Anfasung 36 an den Übergang zwischen dem Gewinde 5 und dem Gewinde 6 an und wirken somit als Anschlag zur Begrenzung der Einschraubtiefe.

Die Erfindung ist nicht auf die beschriebenen und gezeichneten Ausführungsbeispiele beschränkt. So können die anhand einzelner Figuren beschriebenen Merkmale ohne weiteres untereinander ausgetauscht werden. Der Gewindeeinsatz kann in Verbindung mit allen gezeichneten Nietmuttern eingesetzt werden. Auch muß der Gewindeeinsatz nicht unbedingt in das Zuggewinde sondern kann in jedes andere der vorhandenen Gewinde eingeschraubt werden. Der Gewindedurchmesser des Innengewindes des Gewindeeinsatzes muß mit keinem der Gewindedurchmesser der Nietmutter übereinstimmen, sondern kann auch abweichend ausgebildet und beispielsweise auch in einer Sackbohrung im Gewindeeinsatz angeordnet sein.

Weiterhin können alle gezeichneten Nietmuttern mit dem konischen Verformungsbereich versehen werden. Der Gewindedorn kann, beispielsweise in Verbindung mit der Nietmutter nach Fig. 2, ebenfalls ein dreistufiges Gewinde enthalten. Für Sonderzwecke ist es weiterhin möglich, auch vier und noch mehr Gewindestufen vorzusehen. Wenn ein genügend starkes Zuggewinde zur Verfügung steht, kann schließlich das am freien Ende des Schaftes mündende Gewinde einen größeren Gewindedurchmesser aufweisen als das Zuggewinde. Schließlich kann die erfindungsgemäße Nietmutter, wie auch alle ähnlichen Nietmuttern des Standes der Technik, zum Vernieten mehrerer Bauteile verwendet werden.

0198275

EP 2863-204/er

Ludwig Kraemer

Sudetenstraße 23

8761 Mönchberg

<u>Nietmutter</u>

<u>P a t e n t a n s p r ü c h e</u>

1. · Nietmutter (1, 7, 11, 12, 23), die mit Hilfe eines
Gewindedorns (16) blindsetzbar ist, wobei die Nietmutter
(1, 7, 11, 12, 23) einen Schaft (2) aufweist, der an
einem Ende mit einem Setzkopf (3) versehen ist, im
Inneren ein in den Schaft (2) eingeformtes erstes, als
Zuggewinde ausgebildetes Innengewinde (5, 8, 14, 24)
enthält und einen zwischen dem ersten Innengewinde (5,
8, 14, 24) und dem Setzkopf (3) angeordneten
Verformungsbereich (V) aufweist, und wobei der
Gewindedorn (16) mit einem in das erste Innengewinde (5,
8, 14, 24) der Nietmutter (1, 7, 11, 12, 23) durch eine
Innenbohrung (4, 13) vom Setzkopfende her einschraubbaren Außengewinde (18 bzw. 19) versehen ist,
dadurch  g e k e n n z e i c h n e t  ,
daß zusätzlich mindestens ein zweites Innengewinde (6,
9, 10, 15, 28, 35) mit einem vom ersten Innengewinde (5,
8, 14, 24) unterschiedlichen Gewindedurchmesser (d)
vorgesehen ist.

2. Nietmutter nach Anspruch 1, dadurch  g e k e n n -
z e i c h n e t  , daß das zweite Innengewinde (6,
9, 10, 15, 28, 35) ebenfalls in den Schaft (2)
eingeformt ist.

3. Nietmutter nach einem der Ansprüche 1 oder 2,
dadurch  g e k e n n z e i c h n e t  ,
daß das Gewinde mit dem kleinsten Gewindedurchmesser (d)
die größte Entfernung vom Setzkopf (3) aufweist.

4. Nietmutter nach einem der Ansprüche 1 bis 3, dadurch
g e k e n n z e i c h n e t  , daß ein drittes
Innengewinde (10) vorgesehen ist.

5. Nietmutter nach einem der Ansprüche 1 bis 4, dadurch
g e k e n n z e i c h n e t  , daß als Zuggewinde das
Innengewinde (5, 8, 14, 24) mit dem größten
Gewindedurchmesser (d) dient.

6. Nietmutter nach einem der Ansprüche 1 bis 5, dadurch
g e k e n n z e i c h n e t  , daß der Gewindedorn
(16) zwei Außengewinde (18, 19) enthält.

7. Nietmutter mindestens nach Anspruch 1, dadurch
g e k e n n z e i c h n e t  , daß das zweite
Innengewinde (28, 35) an einem mittels eines
Außengewindes (26, 34) in den Schaft (2) einschraubbaren
Gewindeeinsatz (25, 31) vorgesehen ist.

3

0198275

8. Nietmutter nach Anspruch 7, dadurch gekennzeichnet , daß der Gewindeeinsatz (25, 31) in das Zuggewinde (5, 8, 14, 24) einschraubbar ist.

9. Nietmutter nach Anspruch 7 oder 8, dadurch gekennzeichnet , daß der Gewindedurchmesser des Innengewindes (28, 35) des Gewindeeinsatzes (25, 31) dem Gewindedurchmesser eines weiteren Innengewindes (6, 9, 10, 15) im Schaft (2) entspricht.

10. Nietmutter nach einem der Ansprüche 7 bis 9, dadurch gekennzeichnet , daß ein Anschlag (29, 30, 33, 37, 36) vorgesehen ist, der die Einschraubtiefe des Gewindeeinsatzes (25, 31) begrenzt.

11. Nietmutter nach Anspruch 10, dadurch gekennzeichnet , daß der Anschlag (29, 36) durch den Übergang zwischen einem Gewinde mit einem größeren Gewindedurchmesser auf ein Gewinde mit einem kleineren Gewindedurchmesser gebildet wird.

12. Nietmutter nach einem der Ansprüche 7 bis 11, dadurch gekennzeichnet , daß der Gewindeeinsatz (31) einen Kopfansatz (33) mit einer Anschlagfläche aufweist, der eine in der Nähe des Setzkopfes (3) am Schaft (2) angeordnete Gegenanschlagfläche (37) zugeordnet ist.

13. Nietmutter nach einem der Ansprüche 1 bis 12, dadurch gekennzeichnet , daß die Innenbohrung (4, 13) zumindest im Verformungsbereich (V) konisch verläuft, wobei sich der größte Innendurchmesser ($T_{max}$) in der Nähe des Setzkopfes (3) befindet.

14.    Nietmutter nach einem der Ansprüche 1 bis 13,
dadurch      g e k e n n z e i c h n e t    , daß die
Innenbohrung als Durchgangsbohrung (4) ausgebildet ist.

15.    Nietmutter nach einem der Ansprüche 1 bis 13,
dadurch      g e k e n n z e i c h n e t    , daß die
Innenbohrung als Sackbohrung (13) ausgebildet ist.

FIG.1   FIG.2   FIG.3   FIG.4

0198275

FIG.5

FIG.7a

FIG.6

FIG.7b

FIG.8a

FIG.8b

FIG.9a

FIG.9b

### EINSCHLÄGIGE DOKUMENTE

EP 86103997.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,A | US - A - 3 750 525 (KENNETH A. WATERS)<br><br>* Gesamt *<br><br>-- | 1 | F 16 B 13/04<br>F 16 B 19/00<br>F 16 B 19/08<br>F 16 B 19/10 |
| A | US - A - 4 416 572 (DANIEL A. BLACK)<br><br>* Zusammenfassung *<br><br>-- | 1 | |
| A | CH - A5 - 646 760 (LUDWIG KRAEMER)<br><br>* Zusammenfassung *<br><br>-- | 1 | |
| A | DE - A1 - 2 617 269 (TEXTRON INC.)<br><br>* Patentanspruch 1; Fig. 1 *<br><br>-- | 1 | |
| A | DE - A1 - 3 038 061 (HI - SHEAR CORP.)<br><br>* Patentanspruch 1 *<br><br>---- | 1 | **RECHERCHIERTE SACHGEBIETE (Int. Cl.4)**<br><br>F 16 B |

Der vorliegende Recherchenbericht wurde für alle Patentansprüche erstellt.

| Recherchenort | Abschlußdatum der Recherche | Prüfer |
|---|---|---|
| WIEN | 30-05-1986 | HEIN |